# EUROPEAN PATENT SPECIFICATION

(11) **EP 3 418 623 B1**
(45) Date of publication and mention of the grant of the patent: **19.02.2020**
(21) Application number: 17176972.2
(22) Date of filing: 20.06.2017
(51) Int. Cl.: F21S 8/00

(54) **LIGHTING DEVICE FOR VEHICLES PROVIDED WITH ROTATING LIGHTING MODULES**
BELEUCHTUNGSVORRICHTUNG FÜR FAHRZEUGE MIT DREHENDEN BELEUCHTUNGSMODULEN
DISPOSITIF D'ÉCLAIRAGE POUR VÉHICULES POURVUS DE MODULES D'ÉCLAIRAGE ROTATIFS

(43) Date of publication of application: 26.12.2018
(73) Proprietor: Automotive Lighting Italia S.p.A., 10078 Venaria Reale (Torino) (IT); PSA Automobiles SA, 78300 Poissy (FR)
(72) Inventor: RODRIGUEZ ORTEGA, Pablo, 10078 Venaria Reale (IT); RENARD, Stephanie, 10078 Venaria Reale (IT); ZATTONI, Sergio, 10078 Venaria Reale (IT); LE DALL, Christophe, 78140 Vélizy Villacoublay (FR); GONCALVES, Whilk Marcelino, 78140 Vélizy Villacoublay (FR); BORE, Michael, 78140 Vélizy Villacoublay (FR)
(74) Representative: Plebani, Rinaldo

(56) References cited:
- EP-A2- 2 182 274
- US-A1- 2008 266 890

## Description

### Technical field of the invention

The present invention relates to a lighting device equipped with one or more rotating lighting modules, e.g. using LEDs as a light source, in order to provide selectively more than one optical functions, like signaling functions and lighting functions as forward low beam (cross beam) or fog beam, provided with advanced adaptive functions like AFS (Adaptive Function System) and DBL (Dynamic Bending Light).

### Technical Background

Lighting devices for vehicles provided with rotating LED lighting modules are known in the art.

For example, EP2902701 discloses a device wherein a lighting module comprises a light source and at least one reflector and wherein the reflector is motorized and the light source is a LED; the reflector consists of a rotating support having two opposite faces, one constituting the reflector and the other realizing a second function, e.g. an aspect function; a fixed motor rotates the support with respect to the fixed LED light source in order to bring selectively the two faces on the front side of the device facing toward the direction of motion of the vehicle; the support also bears at its opposite faces two light guides operatively associated with a second LED.

Lighting modules like that one of EP2902701 may be too expensive and too bulky in the case more than one rotating lighting module has to be used in the same lighting device, as it may be necessary to provide the required photometric performances for e.g. headlamps.

When all the rotating lighting modules are to be moved together, it would be convenient to employ one single motor to control all the rotating modules. However, such a solution is not easy to be implemented both due to the limited space usually available within the housing body of the headlamp and due to assembly constraints in view of the fact that all the rotating modules and the control devices thereof have to be assembled through the front inlet opening of the housing body, which is then closed by a transparent cover (clear lens) or by an optical lens.

US20140029288 relates to a manually operated regulation device for a headlamp including a plurality of lighting modules which have to be precisely aligned in elevation: the device is based on a nut and screw device linked to a rocker arm; by rotating the screw, the nut, which engages the rocker arm, is translated along the screw causing the rocker arm to tilt, so moving the lighting module, which is rigid to the end of the rocker arm opposite to the one engaged by the nut.

The device of US20140029288 is useful for causing very limited displacement only of the lighting module and is anyway of large bulk, difficult to assemble and may be not completely reliable.

KR20130008347 discloses a control device for rotating lighting modules based on cam profiles operatively associated with pins borne by a bar which is translated linearly by a motor and FR2797678 discloses a control device for rotating lighting modules based on a belt transmission.

Also those prior art solutions are not free from the drawbacks associated with the device of US20140029288 and therefore do not solve the problem of reducing or eliminating such drawbacks. US 2008/0.266.890 discloses a lighting device according to the preamble of claim 1.

### Summary of the invention

The object of the present invention is to provide a lighting device for vehicles having more than one rotating lighting modules assembled within an housing body and allowing the rotation of all the lighting modules to be carried out by means of one single motor in a manner which is compact, simple and cost-effective in construction and highly reliable, while allowing at the same time the possibility to assemble all the lighting modules and the rotation mechanism thereof through the frontal inlet opening of the housing body. It is a further object of the invention to provide such lighting device wherein the lighting modules can be rotated to any extent and not along a limited angle as in US20140029288.

According to the invention, therefore, a lighting device for vehicles including a plurality of lighting modules is provided having the features set out in the appended claims.

### Brief description of the drawings

Further features and advantages of the present invention will become more apparent from the following description of one non-limiting embodiment thereof, made with reference to the figures in the accompanying drawings, in which:
- figure 1 shows schematically a plan view from the above of a lighting device according to the invention, provided with three rotating lighting modules;
- figure 2 shows schematically the principle of operation of a mechanism for rotating at the same time, of the same quantity and in the same direction all the lighting modules of the lighting device of figure 1;
- figure 3 shows in an enlarged scale and in a schematic manner a plan view from the above of a detail of the lighting device of figure 1 depicting the layout of the mechanism schematically shown in figure 2;
- figures 4 and 5 shows schematically two possible different embodiments for the layout of the mechanism of figures 2 and 3; and
- figure 6 shows schematically an elevation view of one rotating lighting module employed in the lighting device of figure 1 and designed to be controlled by the mechanism shown in anyone of figures 2 to 5.

### Detailed description

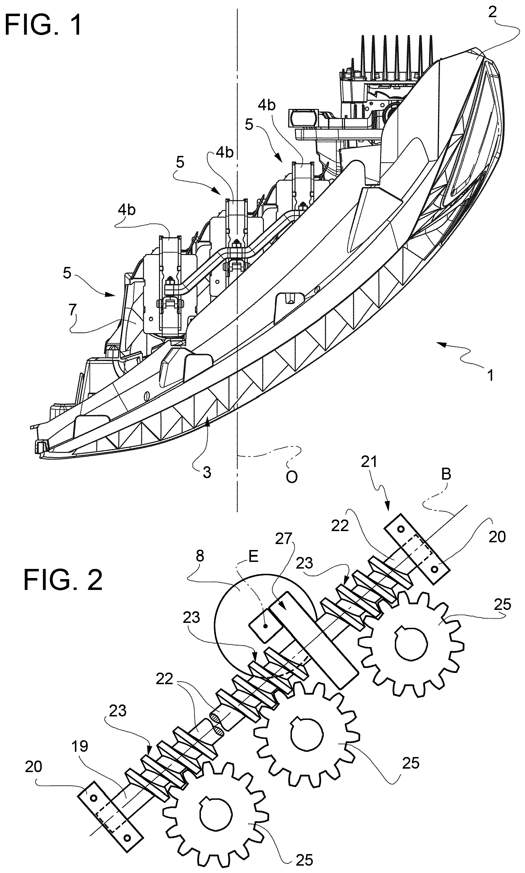

With reference to figure 1, reference numeral 1 indicates as a whole a lighting device consisting, in the non-limiting embodiment shown, in a vehicle headlight, which is only in part and only schematically shown. It is however to be intended that what will be described can be applied to any vehicle lighting device.

The lighting device 1 comprises a generally cup-shaped housing body 2, only the front part of which is shown in figure 1, designed to be mounted on a vehicle, known and not shown for sake of simplicity. The housing body 2 is made of synthetic plastic material by injection molding and has a front inlet opening 3 in use facing opposite to the vehicle and along a driving direction of the vehicle, closed by a transparent cover, known and not shown for sake of simplicity .

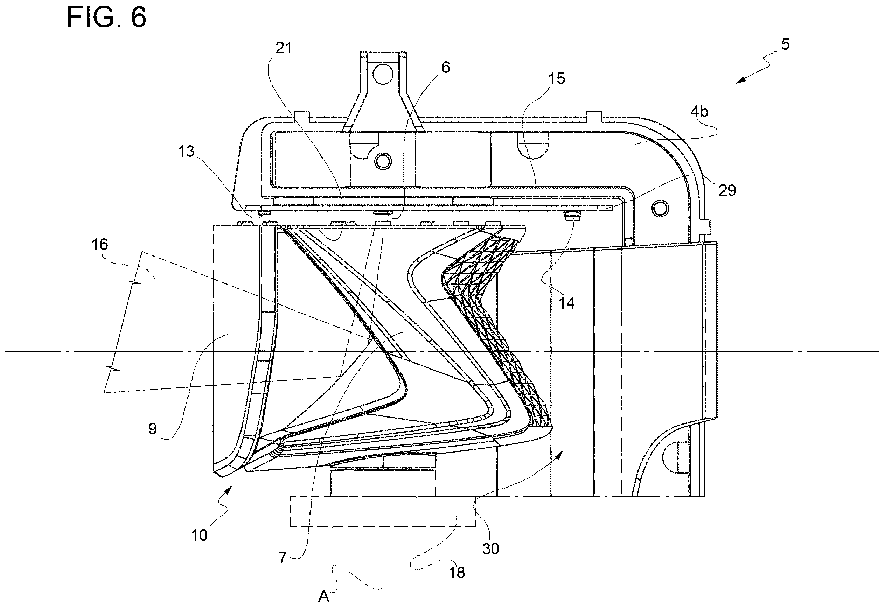

According to the present invention, the housing body 2 carries at the interior thereof a plurality (three in the non-limiting embodiment shown) of rotating lighting modules 5, one of which is shown in details in figure 6.

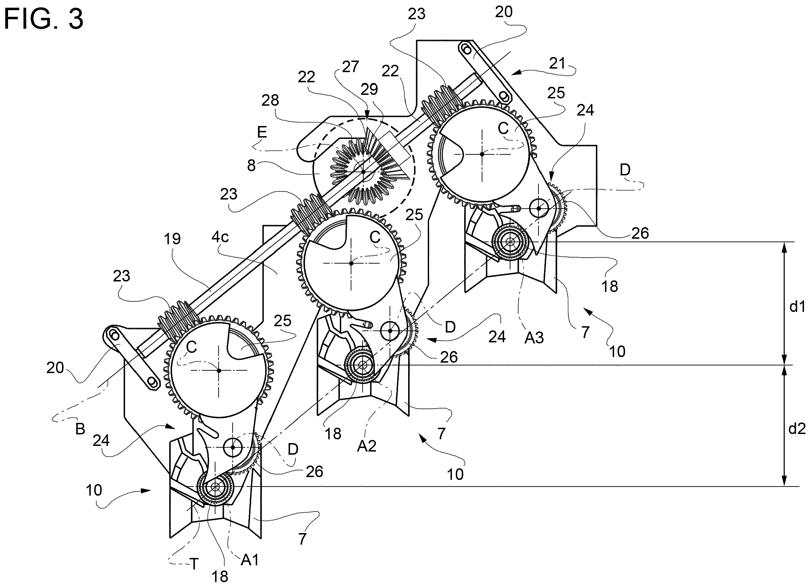

All the rotating lighting modules 5 comprise at least one first light source 6, at least one first reflector 7 and, in the example shown, a framed support 4b holding rigid in a fixed position the first light source 6 and bearing in idling manner the first reflector 7, which is free to rotate relative to the first light source 6 around a first, generally vertical, axis: each module 5 has its own rotation axis, so that the lighting device 1 presents in the embodiment shown three rotating axes indicated as A1, A2 and A3 (figure 3), one for each module 5, all arranged parallel to each other and side by side.

Each rotating lighting module 5 further comprises a lens 9 placed in front of the first reflector 7 and assembled angularly rigid therewith to rotate rigid with the first reflector 7 and eccentrically to the respective axis A1, A2 or A3 (for sake of simplicity axes A1,A2 and A3 are, all together and/or singularly, also generically indicated, here and below, merely as "axis A"), so that both lens 9 and first reflector 7 of each module 5 form together a rotating unit 10 around an axis A (figure 6).

According to a preferred embodiment of the invention, the first light source 6 is a LED; moreover, each lighting module 5 further comprises a couple of second light sources 13 and a third light source 14, all constituted by different LEDs; preferably, as in the embodiment shown, the LEDs constituting the first, second and third light sources 6, 13 and 14 are assembled on a printed circuit board 15 in specific positions and the printed circuit board 15 is carried in a fixed manner by the framed support 4b, directly above the respective rotating unit 10.

In a possible different embodiment, shown only schematically in figure 3, instead of three framed supports 4b, one for each module 5, the lighting device 1 comprises at least one single support 4c bearing all the lighting modules 5 and arranged within the cup-shaped body 2 in a fixed position, rigid therewith. In this case the support 4c bears in a fixed manner all the light sources 6, 13 and 14 of all the modules 5 and bears in idling manner all the rotating units 10, side by side, as it will described in details herein below.

The first light source 6 of each module 5 is arranged substantially aligned with the respective first axis A and faces the first reflector 7 so as to be operatively associated with the respective rotating unit 10, namely, the reflector 7 is designed to collect the light emitted by the first light source 6 when it is switched on and to deviate the collected light as a shaped light beam 16 (shown schematically in dotted lines in figure 6) through the lens 9. The direction of propagation of the light beam 16 defines an optical axis O of the lighting module 5 and of the whole lighting device 1 (figure 1), which optical axis O is normally directed parallel to the running forward direction of the vehicle on which the lighting device 1 is mounted; by rotating each unit 10, the respective light beam 16 may be rotated by a first, predetermined angle around the respective axis A in a plane parallel to a plane perpendicular to axis A.

Preferably, the rotating unit 10 further comprises a backing holder 18 for the first reflector 7, which backing holder 18 is angularly rigid with the reflector 7 and with the lens 9 and is arranged on the rear of the first reflector 7, on the side opposite to the lens 9 in relation to the first reflector 7. Moreover, each rotating unit 10 further comprises a flange element 21, which mechanically connects an upper end 22 of the lens with the backing holder 18; the flange element 21 is also provided with a through hole 23 facing the first light source 6 and designed to let a predetermined amount of the light emitted by the first light source 6 to pass through the flange element 21 to reach the first reflector 7. Preferably, the lens 9 is optically neutral so as the light beam 16 is shaped according to the required photometric characteristics solely by the reflector 9.

In this manner, each unit 10 is free to rotate relative to the respective first light source 6 around a respective first axis A, namely around the axes A1, A2 and A3, which are generally essentially vertical, and the axes of rotation A of the units 10 of all the lighting modules 5 are parallel to each other and arranged side by side.

The lighting device 1 according to the invention further comprises one single first motor 8 (figures 2 and 3) to rotate all the rotating units 10 simultaneously around the respective first axes A1,A2,A3.

According to a first feature of the invention, each rotating unit 10 includes at least one first toothed gear 18 (figures 3 and 6) arranged rigid therewith and coaxial with the respective first axis A.

According to a further feature of the invention, the first motor 8 is operationally associated with one shaft 19 to rotate it around a longitudinal symmetry axis B thereof.

The shaft 19 is rotatably supported within the housing body 2, in the example shown by means of two support brackets 20, e.g. fixed to the common support 4c according to the non-limiting embodiment shown in figure 3.

In any case, the shaft 19 and its symmetry axis B around which it is free to rotate are arranged perpendicular to and radially offset from the first axes A1, A2, A3.

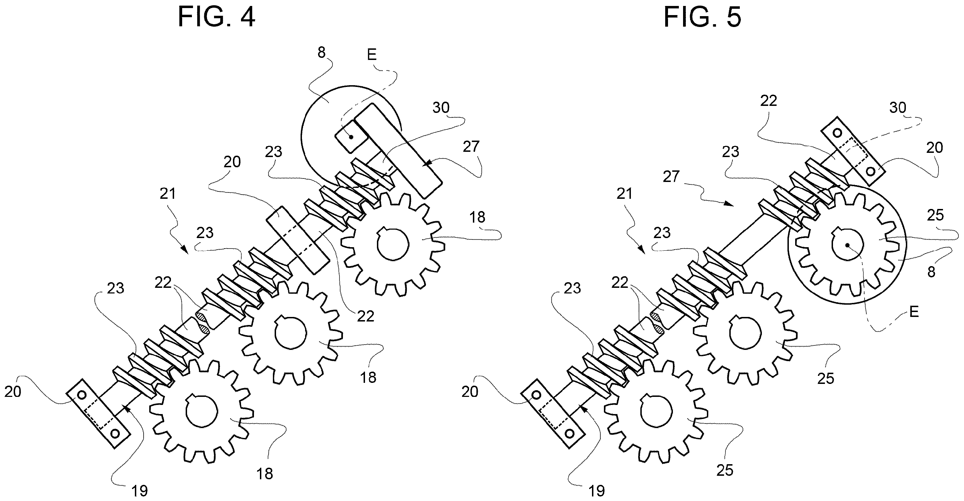

Moreover, according to a further aspect of the invention, the shaft 19 is operationally associated with the first toothed gears 18 of all the rotating units 10 via an endless screw coupling 21 (figures 3 and 4).

The endless screw coupling 21 comprises a plurality of stretches 22 of the shaft 19, present in the same number of the rotating units 10, in the example shown three; each stretch 22 is threaded to provide on the shaft 19 a respective coaxial endless screw 23 rigid with the shaft 19; in this manner the shaft 19 is provided with a plurality, in the example shown three, of endless screws 23, identical to each other.

According to a further aspect of the invention, each endless screw 23 meshes, either directly (figure 4) or via a first gearing 24 (figure 3), with the first toothed gear 18 of a respective rotating unit 10. In this manner the single motor 8 can rotate all the units 10 simultaneously.

According to a preferred embodiment of the invention, shown in details, though only schematically, in figure 3, each endless screw 23 meshes with the respective first toothed gear 18 via a respective first gearing 24 including a second toothed gear 25 and a third toothed gear 26 having, respectively, second and third axes of rotation, respectively indicated with reference letters C and D, arranged parallel to the first axes A.

The second toothed gear 25 of each gearing 24 serving each rotating unit 10 meshes on one side with a corresponding endless screw 23 of the shaft 19 and on the other side with the corresponding third toothed gear 26, which meshes on the opposite side with a respective first toothed gear 18 so transmitting a rotative motion from the screw 23 to the gear 18.

According to a further preferred embodiment, also shown in figure 3, each third toothed gear 26 meshes with the first and the second toothed gears 18,25 at an angle, such that the third axis D of rotation of the third toothed gears 26 is arranged between the axis of rotation A of the first toothed gear 18 and C of the second toothed gear 25.

Moreover, each rotation axis D is arranged laterally offset an ideal plane passing through the axes of rotation A and C of the first and second toothed gears 18,25.

Figure 2 shows schematically and with parts removed for sake of simplicity the same layout of the embodiment shown in figure 3; figure 5 shows schematically and with parts removed for sake of simplicity an alternative layout for the embodiment of figure 3, wherein only the position of the motor 8 is varied, as it will described in details herein below. In both cases, figures 2 and 5 relate to embodiments including a gearing 24 for each rotating unit 10, as shown in figure 3, i.e. to embodiments wherein the gears 18 do not directly mesh with the endless screws 23.

With reference to figure 4, it shows schematically an alternative embodiment of the invention, wherein the endless screws 23 mesh directly with the gears 18, so that the shaft 19 engages directly the rotating units 10.

In any case, according to all the embodiment shown and according to a further aspect of the invention, the shaft 19 and the single first motor 8 are arranged opposite to the rotating units 10 with respect to the single support 4c and/or the plurality of framed support 4b.

Moreover, the shaft 19 is arranged between the single first motor 8 and the rotating units 10, since this layout has shown to be the best for reducing the overall bulk of the lighting device 1 and to allow an easy assembly of all the components thereof.

The first motor 8 is a rotative motor having one axis of rotation E arranged parallel to the axes of rotation A of the rotating units 10 and perpendicular to the longitudinal symmetry axis B of the shaft 19.

According to the embodiments shown in figures 2 to 4, the motor 8 is mechanically connected to the shaft 19 via a second gearing 27, shown in details in figure 3 and only schematically, as a couple of blocks, in figures 2 and 4.

The second gearing 27 comprises one first conical gear 28 rotating around the axis of rotation E of the single first motor 8, and a second conical gear 29 arranged rigid and coaxial with the shaft 19 between two respective stretches 22 thereof threaded to provide the respective coaxial endless screws 23, each operatively associated with the first toothed 18 gear of two adjacent rotating units 10.

According to the embodiment of figure 4, the second gearing 27 is provided at one first end 30 of the shaft 19; in this case, the first end 30 of the shaft 19 extends in cantilever fashion from one respective support bracket 20 of the shaft 19, which support bracket 20 is arranged between two respective stretches 22 of shaft 19 threaded to provide two respective coaxial endless screws 23.

With reference to the embodiment of figure 5, the single first motor 8 is provided coaxial with one of the toothed gears of the first gearing 24 of one of the rotating units 10, in the example shown with the second toothed gear 25 of the unit 10 closer to the end 30 of shaft 19, to directly rotate the gear 25 around its axis C, which coincides with the axis E of the motor 8. The gear 25 meshes with a corresponding endless screw 23, so that the whole shaft 19 is driven by the motor 8 when it is actuated, making also the other gears 25 to rotate via the other endless screws 23 of the shaft 19.

Since each gear 25 meshes with a corresponding third gear 26, which meshes with the gear 18 of one corresponding unit 10, like in the example shown in figure 3, all the rotating units 10 are actuated simultaneously by the motor 8 and the second gearing 27 comprises in this case one of the gears of the first gearing 24, namely gear 25, of one of the units 10.

Since the motor 8 is arranged at the end 30 of shaft 19 it cannot interfere with the rotation of the units 10; in this case, like in the embodiment of figure 4, therefore, the gearing 24 may be absent, the endless screws 23 mesh directly with the gears 18 rigid with the units 10 and the motor 8 is connected to the gear 18 of the unit 10 closer to end 30, so that the second gearing 27 includes in this case the gear 18 actuated by the motor 8 and the endless screw 23 closer to end 30.

Accordingly, figure 5 schematizes an embodiment in which either the said first toothed gear 18 or a toothed gear 25 of the first gearing 24 of one of the rotating units 10, namely of that one closer to end 30, is provided coaxial to the single first motor 8 to be rotated thereby, while either all the first toothed gears 18 or respective toothed gears 25 of all the first gearing 24 of all the rotating units 10 mesh directly with the respective endless screws 23 borne by the shaft 19, so that the second gearing 27 comprises at least one of the endless screw coupling 21 of one rotating unit 10.

According to one last feature of the invention, all the first axes A1,A2,A3 of the first toothed gears 18 are arranged to pass through a line T (figure 3) parallel to the symmetry axis B of the shaft 19.

In this manner the rotating units 10 are arranged side by side, but are also arranged axially offset to one another in the direction of the optical axis O, at prefixed distances to each other indicated as d1 and d2 in figure 3.

Preferably, the distance d1 and the distance d2 are identical to each other.

Owing to the layouts described, it is possible to optimize the use of the (limited) free space available within the housing body 2 and at the same time allow the rotating units 10 to be rotated without limits, even for angles equal to 360°, since any hindrance to the rotation of the reflectors 7 is avoided. Moreover, all the actuating mechanisms, namely the motor 8, the shaft 19 and the gearings 24 and 27 are easily accessible and arranged close to the inlet opening 3, so that the assembly of the lighting device 1 is eased.

All the aims of the invention are therefore accomplished.

## Claims

1. Lighting device (1) for a vehicle comprising a cup-shaped housing body (2) designed to be mounted on the vehicle and a plurality of rotating lighting modules (5) arranged within the housing body facing a front inlet opening (3) thereof, the rotating lighting modules being held by at least one support (4b;4c) arranged inside the housing body rigid therewith, each rotating lighting module comprising at least one first light source (6) held rigid in a fixed position by the support and one rotating unit (10) operatively associated to the at least one first light source, the support (4b;4c) bearing in idling manner the rotating unit, which is free to rotate relative to the respective first light source (6) around a respective first axis (A), the first axes (A1,A2,A3) of the rotating units (10) of all the lighting modules (5) being parallel to each other and arranged side by side; wherein each rotating unit (10) includes at least one first toothed gear (18) arranged rigid therewith and coaxial with the respective first axis, the lighting device further including one single first motor (8) to rotate all the rotating units simultaneously around the respective first axes, the first motor being operationally associated with one shaft (19) rotatably supported within the housing body to rotate the shaft around its longitudinal symmetry axis (B); **characterized in that, in combination:**
i)- the shaft (19) is operationally associated with the first toothed gears (18) of all the rotating units via an endless screw coupling (21);
ii)- a longitudinal symmetry axis (B) of said shaft (19) is arranged perpendicular to and radially offset from the first axes (A1,A2,A3); and
iii)- the endless screw coupling (21) comprises a plurality of stretches (22) of said shaft, present in the same number of the said rotating units, each stretch of the shaft being threaded to provide a coaxial endless screw (23) which meshes, either directly or via a first gearing (24), with said first toothed gear (18) of a respective rotating unit (10).

2. Lighting device according to claim 1, **characterized in that** each endless screw (23) meshes with a respective said first toothed gear (18) via a second and a third toothed gears (25,26) having second and third axes of rotation parallel to said first axes; the second toothed gear (25) meshing on one side with the endless screw (23) and on the other side with the third toothed gear (26), which meshes on the opposite side with a respective first toothed gear (18).

3. Lighting device according to claim 2, **characterized in that** each third toothed gear (26) meshes with the first and the second toothed gears (18,25) at an angle, such that the third axis of rotation of the third toothed gear (26) is arranged between the axis of rotation of the first and the second toothed gear (18,25) and laterally offset a plane passing through the axes of rotation of the first and second toothed gear.

4. Lighting device according to anyone of the preceding claims, **characterized in that** said shaft (19) and said single first motor (8) are arranged opposite to the rotating units (10) with respect to said at least one support (4b;4c); and **in that** said shaft (19) is arranged between said single first motor (8) and said rotating units (10); said one first motor being a rotative motor having one axis of rotation (E) arranged parallel to the axes of rotation of the rotating units (10) and perpendicular to the longitudinal symmetry axis of the shaft (19), to which it is mechanically connected via a second gearing (27).

5. Lighting device according to claim 4, **characterized in that** said second gearing (27) comprises one first conical gear (28) rotating around said axis of rotation of said single first motor and a second conical gear (29) arranged rigid and coaxial with the shaft between two respective stretches (22) thereof which are threaded to provide respective coaxial endless screws (23), each operatively associated with the first toothed gears (18) of two adjacent rotating units (10).

6. Lighting device according to claim 4, **characterized in that** said second gearing (27) is provided at one first end (30) of the shaft, the first end of the shaft extending in cantilever fashion from one respective support bracket (20) of the shaft.

7. Lighting device according to claim 4, **characterized in that** either the said first toothed gear (18) (25) or a toothed gear of said first gearing (24) of one of said rotating units (10) is provided coaxial to said single first motor (8) to be rotated thereby, while either all the said first toothed gears or respective toothed gears of all said first gearing of all said rotating units (10) mesh directly with respective endless screws (23) borne by the shaft (19), so that said second gearing (27) comprises at least one of said endless screw coupling (21) of one rotating unit (10).

8. Lighting device according to anyone of the preceding claims, **characterized in that** each said rotating unit comprises at least a first reflector (7) and at least one lens (9) arranged in front of the reflector and connected rigid with the reflector to form the rotating unit (10), the reflector (7) being arranged such that it collects the light emitted by the at least one first light source (6) when it is switched on.

9. Lighting device according to anyone of the preceding claims, **characterized in that** all the first axes of said first toothed gears (18) are arranged to pass through a line (T) parallel to the symmetry axis of said shaft (19).

10. Vehicle provided with a lighting device (1) according to anyone of the preceding claims.

## Patentansprüche

1. Beleuchtungsvorrichtung (1) für ein Fahrzeug, die einen becherförmigen Gehäusekörper (2), der für die Montage an dem Fahrzeug ausgelegt ist, und mehrere drehbare Leuchtmodule (5), die innerhalb des Gehäusekörpers angeordnet sind und einer vorderen Einlassöffnung (3) desselben zugewandt sind, umfasst, wobei die drehbaren Leuchtmodule von wenigstens einem Träger (4b; 4c) gehalten werden, der innerhalb des Gehäusekörpers starr angeordnet ist, wobei jedes drehbare Leuchtmodul wenigstens eine erste Lichtquelle (6), die durch den Träger starr in einer festen Position gehalten wird, und eine Dreheinheit (10), die mit der wenigstens einen ersten Lichtquelle wirkungsverbunden ist, umfasst, wobei der Träger (4b; 4c) in freilaufender Weise die Dreheinheit trägt, die relativ zu der jeweiligen ersten Lichtquelle (6) um eine jeweilige erste Achse (A) frei drehbar ist, wobei die ersten Achsen (A1, A2, A3) der Dreheinheiten (10) aller Leuchtmodule (5) parallel zueinander und nebeneinander angeordnet sind; wobei jede Dreheinheit (10) wenigstens ein erstes Zahnrad (18) aufweist, das mit dieser starr und koaxial mit der jeweiligen ersten Achse angeordnet ist, wobei die Beleuchtungsvorrichtung ferner einen einzelnen ersten Motor (8) aufweist, um alle Dreheinheiten gleichzeitig um die jeweiligen ersten Achsen zu drehen, wobei der erste Motor mit einer Welle (19) wirkungsverbunden ist, die innerhalb des Gehäusekörpers drehbar gelagert ist, um die Welle um ihre Längssymmetrieachse (B) zu drehen;
**dadurch gekennzeichnet, dass in Kombination:**
i)- die Welle (19) mit den ersten Zahnrädern (18) aller Dreheinheiten über eine Schneckenkupplung (21) wirkungsverbunden ist;
ii)- eine Längssymmetrieachse (B) der Welle (19) senkrecht zu und radial versetzt von den ersten Achsen (A1, A2, A3) angeordnet ist; und
iii)- die Schneckenkupplung (21) mehrere Abschnitte (22) der Welle umfasst, die in der gleichen Anzahl wie die Dreheinheiten vorhanden sind, wobei jeder Abschnitt der Welle mit einem Gewinde versehen ist, um eine koaxiale Schnecke (23) bereitzustellen, die entweder direkt oder über ein erstes Getriebe (24) mit dem ersten Zahnrad (18) einer jeweiligen Dreheinheit (10) in Eingriff ist.

2. Beleuchtungsvorrichtung nach Anspruch 1,
**dadurch gekennzeichnet, dass** jede Schnecke (23) mit einem jeweiligen ersten Zahnrad (18) über ein zweites und ein drittes Zahnrad (25, 26), die zweite und dritte Drehachsen parallel zu den ersten Achsen aufweisen, in Eingriff ist; wobei das zweite Zahnrad (25) auf der einen Seite mit der Schnecke (23) und auf der anderen Seite mit dem dritten Zahnrad (26) in Eingriff ist, das auf der gegenüberliegenden Seite mit einem jeweiligen ersten Zahnrad (18) in Eingriff ist.

3. Beleuchtungsvorrichtung nach Anspruch 2,
**dadurch gekennzeichnet, dass** ein jedes dritte Zahnrad (26) mit dem ersten und dem zweiten Zahnrad (18, 25) in einem Winkel in Eingriff steht, so dass die dritte Drehachse des dritten Zahnrads (26) zwischen den Drehachsen des ersten und des zweiten Zahnrades (18, 25) angeordnet ist und von einer Ebene, die durch die Drehachsen des ersten und zweiten Zahnrades verläuft, lateral versetzt ist.

4. Beleuchtungsvorrichtung nach einem der vorangehenden Ansprüche,
**dadurch gekennzeichnet, dass** die Welle (19) und der einzelne erste Motor (8) bezüglich des wenigstens einen Trägers (4b; 4c) den Dreheinheiten (10) gegenüberliegend angeordnet sind; und dass die Welle (19) zwischen dem einzelnen ersten Motor (8) und den Dreheinheiten (10) angeordnet ist, wobei der eine erste Motor ein Rotationsmotor mit einer Drehachse (E) ist, die parallel zu den Drehachsen der Dreheinheiten (10) und senkrecht zu der Längssymmetrieachse der Welle (19) angeordnet ist, mit der er über ein zweites Getriebe (27) mechanisch verbunden ist.

5. Beleuchtungsvorrichtung nach Anspruch 4,
**dadurch gekennzeichnet, dass** das zweite Getriebe (27) ein erstes Kegelzahnrad (28), das sich um die Drehachse des einzelnen ersten Motors dreht, und ein zweites Kegelzahnrad (29) umfasst, das starr und koaxial mit der Welle zwischen zwei jeweiligen Abschnitten (22) derselben angeordnet ist, die mit einem Gewinde versehen sind, um entsprechende koaxiale Schnecken (23) bereitzustellen, die jeweils mit den ersten Zahnrädern (18) von zwei benachbarten Dreheinheiten (10) wirkungsverbunden sind.

6. Beleuchtungsvorrichtung nach Anspruch 4,
**dadurch gekennzeichnet, dass** das zweite Getriebe (27) an einem ersten Ende (30) der Welle vorgesehen ist, wobei sich das erste Ende der Welle freitragend von einem jeweiligen Befestigungsbügel (20) der Welle erstreckt.

7. Beleuchtungsvorrichtung nach Anspruch 4,
**dadurch gekennzeichnet, dass** entweder das erste Zahnrad (18) (25) oder ein Zahnrad des ersten Getriebes (24) einer der Dreheinheiten (10) koaxial zu dem einzelnen ersten Motor (8) vorgesehen ist, um von diesem gedreht zu werden, während entweder alle ersten Zahnräder oder jeweilige Zahnräder aller ersten Getriebe aller Dreheinheiten (10) direkt mit den jeweiligen Schnecken (23), die von der Welle (19) getragen werden, in Eingriff stehen, so dass das zweite Getriebe (27) wenigstens eine Schneckenkupplung (21) einer Dreheinheit (10) umfasst.

8. Beleuchtungsvorrichtung nach einem der vorangehenden Ansprüche, **dadurch gekennzeichnet, dass** jede der Dreheinheiten wenigstens einen ersten Reflektor (7) und wenigstens eine vor dem Reflektor angeordnete und mit dem Reflektor starr verbundene Linse (9) umfasst, um die Dreheinheit (10) zu bilden, wobei der Reflektor (7) so angeordnet ist, dass er das Licht sammelt, das von der wenigstens einen ersten Lichtquelle (6) abgegeben wird, wenn diese eingeschaltet wird.

9. Beleuchtungsvorrichtung nach einem der vorangehenden Ansprüche, **dadurch gekennzeichnet, dass** alle ersten Achsen der ersten Zahnräder (18) so angeordnet sind, dass sie durch eine Linie (T) parallel zu der Symmetrieachse der Welle (19) verlaufen.

10. Fahrzeug, das mit einer Beleuchtungsvorrichtung (1) nach einem der vorangehenden Ansprüche ausgestattet ist.

## Revendications

1. Dispositif d'éclairage (1) pour un véhicule comprenant un corps de logement en forme de coupelle (2) conçu pour être monté sur le véhicule et une pluralité de modules d'éclairage rotatifs (5) agencés dans le corps de logement faisant face à son ouverture d'entrée avant (3), les modules d'éclairage rotatifs étant maintenus par au moins un support (4b ; 4c) agencé à l'intérieur du corps de logement solidaire avec ce dernier, chaque module d'éclairage rotatif comprenant au moins une première source de lumière (6) maintenue solidaire dans une position fixe par le support et une unité rotative (10) associée de manière opérationnelle à la au moins une première source de lumière, le support (4b ; 4c) supportant, au repos, l'unité rotative qui est libre de tourner par rapport à la première source de lumière (6) respective autour d'un premier axe (A) respectif, les premiers axes (A1, A2, A3) des unités rotatives (10) de tous les modules d'éclairage (5) étant parallèles entre eux et agencés côte à côte ; dans lequel chaque unité rotative (10) comprend au moins une première roue dentée (18) agencée de manière solidaire avec cette dernière et coaxiale avec le premier axe respectif, le dispositif d'éclairage comprenant en outre un premier moteur (8) unique pour faire tourner toutes les unités rotatives simultanément autour des premiers axes respectifs, le premier moteur étant associé de manière opérationnelle à un arbre (19) supporté, en rotation, dans le corps de logement, pour faire tourner l'arbre autour de son axe de symétrie longitudinal (B), **caractérisé en ce que**, en combinaison :
i) l'arbre (19) est associé de manière opérationnelle aux premières roues dentées (18) de toutes les unités rotatives via un couplage de vis sans fin (21) ;
ii) un axe de symétrie longitudinal (B) dudit arbre (19) est agencé perpendiculairement à et radialement décalé des premiers axes (A1, A2, A3) ; et
iii) le couplage de vis sans fin (21) comprend une pluralité de tendeurs (22) dudit arbre, présents dans le même nombre desdites unités rotatives, chaque tendeur de l'arbre étant fileté pour fournir une vis sans fin (23) coaxiale qui s'engrène, directement ou via un premier engrenage (24), avec ladite première roue dentée (18) d'une unité rotative (10) respective.

2. Dispositif d'éclairage selon la revendication 1, **caractérisé en ce que** chaque vis sans fin (23) s'engrène avec une première roue dentée (18) respective via une deuxième et une troisième roue dentée (25, 26) ayant des deuxième et troisième axes de rotation parallèles auxdits premiers axes ; la deuxième roue dentée (25) s'engrenant d'un côté avec la vis sans fin (23) et de l'autre côté avec la troisième roue dentée (26), qui s'engrène sur le côté opposé avec une première roue dentée (18) respective.

3. Dispositif d'éclairage selon la revendication 2, **caractérisé en ce que** chaque troisième roue dentée (26) s'engrène avec la première et la deuxième roue dentée (18, 25) à un angle, de sorte que le troisième axe de rotation de la troisième roue dentée (26) est agencé entre l'axe de rotation de la première et de la deuxième roue dentée (18, 25) et latéralement décalé d'un plan passant par les axes de rotation de la première et de la deuxième roue dentée.

4. Dispositif d'éclairage selon l'une quelconque des revendications précédentes, **caractérisé en ce que** ledit arbre (19) et ledit premier moteur (8) unique sont agencés à l'opposé des unités rotatives (10) par rapport audit au moins un support (4b ; 4c) ; et **en ce que** ledit arbre (19) est agencé entre ledit premier moteur (8) unique et lesdites unités rotatives (10) ; ledit premier moteur étant un moteur rotatif ayant un axe de rotation (E) agencé parallèlement aux axes de rotation des unités rotatives (10) et perpendiculairement à l'axe de symétrie longitudinale de l'arbre (19), auquel il est mécaniquement raccordé via un second engrenage (27).

5. Dispositif d'éclairage selon la revendication 4, **caractérisé en ce que** ledit second engrenage (27) comprend un premier engrenage conique (28) tournant autour dudit axe de rotation dudit premier moteur unique et un second engrenage conique (29) agencé de manière solidaire et coaxiale avec l'arbre entre ses deux tendeurs (22) respectifs qui sont filetés pour fournir des vis sans fin (23) coaxiales respectives, chacune associée de manière opérationnelle avec les premières roues dentées (18) des deux unités rotatives (10) adjacentes.

6. Dispositif d'éclairage selon la revendication 4, **caractérisé en ce que** ledit second engrenage (27) est prévu au niveau d'une première extrémité (30) de l'arbre, la première extrémité de l'arbre s'étendant en porte-à-faux à partir d'une console de support (20) de l'arbre.

7. Dispositif d'éclairage selon la revendication 4, **caractérisé en ce que** ladite première roue dentée (18) (25) ou une roue dentée dudit premier engrenage (24) de l'une desdites unités rotatives (10) est prévue de manière coaxiale par rapport audit premier moteur (8) unique, pour être entraînée ainsi en rotation, alors que toutes lesdites premières roues dentées ou les roues dentée respectives de la totalité dudit premier engrenage de toutes lesdites unités rotatives (10) s'engrènent directement avec des vis sans fin (23) respectives portées par l'arbre (19), de sorte que ledit second engrenage (27) comprend au moins l'un dudit couplage de vis sans fin (21) d'une unité rotative (10).

8. Dispositif d'éclairage selon l'une quelconque des revendications précédentes, **caractérisé en ce que** chacune desdites unités rotatives comprend au moins un premier réflecteur (7) et au moins une lentille (9) agencée en face du réflecteur et raccordée de manière solidaire avec le réflecteur pour former l'unité rotative (10), le réflecteur (7) étant agencé de sorte qu'il collecte la lumière émise par la au moins une première source de lumière (6) lorsqu'elle est mise en marche.

9. Dispositif d'éclairage selon l'une quelconque des revendications précédentes, **caractérisé en ce que** tous les premiers axes desdites premières roues dentées (18) sont agencés pour traverser une ligne (T) parallèle à l'axe de symétrie dudit arbre (19).

10. Véhicule doté d'un dispositif d'éclairage (1) selon l'une quelconque des revendications précédentes.
